Europäisches Patentamt

European Patent Office

Office européen des brevets

(19)

(11) Numéro de publication : **0 426 550 B1**

(12) **FASCICULE DE BREVET EUROPEEN**

(45) Date de publication du fascicule du brevet :
31.08.94 Bulletin 94/35

(51) Int. Cl.⁵ : **G01B 5/30**, G01N 19/10

(21) Numéro de dépôt : **90403052.5**

(22) Date de dépôt : **29.10.90**

(54) **Appareil pour déterminer le coéfficient de dilatation hydrique des élements d'une structure composite.**

(30) Priorité : **30.10.89 FR 8914212**

(43) Date de publication de la demande :
**08.05.91 Bulletin 91/19**

(45) Mention de la délivrance du brevet :
**31.08.94 Bulletin 94/35**

(84) Etats contractants désignés :
**DE ES GB IT**

(56) Documents cités :
**REV. SCI. INSTRUM., vol. 50, no. 1, janvier
1979, pages 129-130, American Institute of
Physics; R.D. SANDISON et al.:
"High-temperature dilatometer system for
measuring the shrinkage kinetics of a liquidcontaining ceramic-system"**

(56) Documents cités :
**IBM TECHNICAL DISCLOSURE BULLETIN,
vol. 9, no. 6, novembre 1966, page 689, New
York, US; F.E. GRACE et al.: "Enviromental
dimensional monitoring"
N.T.I.S. TECHNICAL NOTES, no. 7, partie H,
juillet 1984, page 507, Springfield, Virginia, US;
"ELectronic dilatometer"**

(73) Titulaire : **AEROSPATIALE Société Nationale
Industrielle
37, Boulevard de Montmorency
F-75781 Paris Cédex 16 (FR)**

(72) Inventeur : **Canevet, Maurice
36 rue des Sorins
F-92500 Rueil Malmaison (FR)**
Inventeur : **Lesage, Pascal
90Bis, Route Nationale 12
F-78940 La Queue Les Yvelines (FR)**

(74) Mandataire : **Mongrédien, André et al
c/o SOCIETE DE PROTECTION DES
INVENTIONS
25, rue de Ponthieu
F-75008 Paris (FR)**

Jouve, 18, rue Saint-Denis, 75001 PARIS

**Description**

L'invention concerne un appareil permettant de déterminer le coefficient de dilatation hydrique d'une structure composite, à partir d'échantillons de cette structure, qui peuvent se présenter notamment sous la forme d'une barre tubulaire, d'une plaque ou d'un sandwich en nids d'abeilles.

Le coefficient de dilatation hydrique d'une structure composite, habituellement désigné par β, est déterminé par la relation

$$\frac{\Delta L}{L_o} = \beta \frac{\Delta M}{M_o} \quad (1)$$

où $L_o$ et $M_o$ représentent respectivement la longueur initiale et la masse initiale d'un échantillon sec de la structure composite, $\Delta L$ et $\Delta M$ représentant l'évolution de ces grandeurs lorsqu'on imprègne d'eau cet échantillon.

La connaissance du coefficient de dilatation hydrique β présente un intérêt particulier dans le domaine spatial, compte tenu du fait que les optiques embarquées sont fréquemment supportées par des structures composites. En effet, le vide spatial a pour effet d'assécher ces structures composites, et l'échappement de l'eau contenue initialement dans ces structures se traduit par des variations dimensionnelles qui se répercutent sur les optiques qu'elles supportent.

Actuellement, ces variations dimensionnelles sont prises en compte par des dispositifs électro-mécaniques associés aux optiques embarquées et qui permettent de corriger le positionnement de ces dernières par des déplacements suivant l'axe optique. Cependant, le contrôle de l'ensemble de la structure porteuse, et la détermination des grandeurs de calage des optiques, juste avant le lancement, nécessitent la connaissance parfaite de la réaction des matériaux à la diffusion de l'eau.

Par ailleurs, étant donné que les variations dimensionnelles résultant de l'assèchement sous vide d'une structure composite initialement humide sont extrèmement faibles, (parfois inférieures à 1 μm par mm d'échantillon) et lentes (plusieurs semaines), on ne dispose pas actuellement d'un dilatomètre suffisamment précis et stable pour permettre de mesurer ces variations, afin de les prendre en compte lors de la vie des pièces en matériau composite supportant les optiques embarquées.

La mise au point d'un tel appareil se heurtait jusqu'à présent à des difficultés liées principalement au fait que les capteurs de déplacement existants qui semblaient suffisamment précis et stables pour pouvoir être utilisés étaient sensibles à l'évolution de l'humidité ambiante dans des proportions au moins égales à celles des mesures à effectuer.

S'il pouvait sembler possible de résoudre ce problème en plaçant le capteur en dehors de la zone contenant l'échantillon et dans laquelle on fait varier l'humidité ambiante, cela aurait conduit à d'autres causes d'erreurs, par suite de la nécessité qui en découlait de placer un organe de liaison entre le capteur et l'échantillon. En effet, cet organe de liaison aurait traversé une zone de transition soumise à des contraintes d'origine thermique entraînant nécessairement des déformations non compensées, et des perturbations locales d'environnement de test.

L'invention a précisément pour objet un appareil permettant de déterminer le coefficient de dilatation hydrique d'un matériau composite, grâce à une mesure précise, stable et insensible à l'humidité environnante, des variations de longueur d'un échantillon de ce matériau entraînées par les variations de l'humidité qu'il contient, ce qui autorise la prise en compte des déformations résultant de l'évacuation de l'eau dans le vide spatial, sur des structures composites supportant des optiques embarquées et permet, par conséquent, un accroissement notable de la précision de ces optiques, ainsi qu'un allègement des systèmes actifs de recalage.

Selon l'invention, ce résultat est obtenu au moyen d'un appareil permettant de déterminer le coefficient de dilatation hydrique β des éléments d'une structure composite, caractérisé par le fait qu'il comprend :

- un berceau rigide, réalisé en un matériau thermiquement stable et non-hygroscopique, et comprenant des moyens pour maintenir dans une position désirée un échantillon de ladite structure et des moyens pour immobiliser une première extrémité de l'échantillon ;
- un capteur de déplacement monté sur le berceau rigide, en face d'une deuxième extrémité de l'échantillon opposée à la première, de façon à mesurer des variations de longueur de l'échantillon ;
- un tube d'admission d'air sec dans le capteur, relié à une source d'air sec et dont une extrémité opposée à ladite source coiffe une partie arrière du capteur de déplacement ;
- une enceinte climatique de réception du berceau rigide et de son capteur de déplacement, apte à faire varier l'humidité de l'atmosphère entourant le berceau et le capteur dans une plage déterminée ; et
- des moyens de mesure de variation de poids de l'échantillon.

Grâce à un appareil ainsi réalisé, il est possible de calculer le coefficient de dilatation hydrique β, à partir des mesures de longueur et de poids, en appliquant la relation (1).

Dans cet appareil, il est important de noter que l'injection d'air sec dans le capteur de déplacement permet d'éviter toute dérive de celui-ci en fonction de l'humidité ambiante, ce qui garantit la précision des mesures, notamment lorsqu'on utilise un capteur à détection par transformateur différentiel linéaire comportant un doigt de contact guidé axialement par un roulement, dont la stabilité et la sensibilité sont, par ailleurs, excellentes.

Etant donné que les extrémités de l'échantillon peuvent se déformer de façon non homogène, sous l'effet de la variation de la quantité d'eau contenue dans cet échantillon, l'appareil est conçu de façon à pouvoir éventuellement s'affranchir de ces effets de bords. A cet effet, les moyens pour immobiliser la première extrémité de l'échantillon sont des moyens de pincement prenant appui sur des faces latérales de ce dernier, et le doigt de contact du capteur est apte à venir en contact avec un organe intermédiaire pincé sur les faces latérales de l'échantillon, à proximité de la deuxième extrémité de ce dernier.

Le capteur de déplacement est connecté électriquement à un moyen d'alimentation électrique qu'il est également indispensable de placer dans une enceinte à température constante, afin de ne pas dégrader la précision de la mesure. Pour la même raison, ce moyen d'alimentation électrique est avantageusement connecté au secteur au travers d'un onduleur stabilisant la tension.

Un mode de réalisation préféré de l'invention va à présent être décrit, à titre d'exemple non limitatif, en se référant aux dessins annexés, dans lesquels :

- la figure 1 est une vue en perspective, partiellement en coupe, d'un berceau rigide constituant une partie d'un appareil servant à déterminer le coefficient de dilatation hydrique $\beta$ d'une structure composite, à partir d'un échantillon de cette structure, qui a dans ce cas la forme d'une barre tubulaire ;
- les figures 2 et 3 sont des vues en coupe montrant comment le berceau rigide de la figure 1 peut aussi être utilisé pour tester des échantillons de structures composites se présentant respectivement sous la forme d'une structure en nids d'abeilles et d'une plaque plane ; et
- la figure 4 est une vue schématique d'un appareil permettant, conformément à l'invention, de déterminer le coefficient de dilatation hydrique d'une structure composite.

Selon l'invention, il est proposé de tester au sol des échantillons des principaux types de matériaux composites utilisés dans l'espace, notamment pour supporter des optiques embarquées, afin de pouvoir donner à ces structures des dimensions qui prennent en compte les variations dimensionnelles induites par l'échappement de l'eau contenue initialement dans ces structures, lorsque ces dernières se trouvent dans le vide spatial.

Pour cela, on a mis au point un appareil permettant de déterminer le coefficient de dilatation hydrique $\beta$ de telles structures composites, à partir d'échantillons des formes usuelles de ces structures, c'est-à-dire de barres tubulaires, de structures en nids d'abeilles et de plaques planes.

Avantageusement, on utilisera cet appareil pour déterminer les coefficients $\beta_0$ et $\beta_{90}$ d'échantillons de structures composites formées de fibres orientées respectivement selon l'axe longitudinal de l'échantillon et perpendiculairement à cet axe. A partir des mesures ainsi effectuées, il est en effet possible de prévoir par le calcul le comportement des structures formées de fibres orientées selon une direction quelconque par rapport à leur axe longitudinal.

L'appareil selon l'invention comprend tout d'abord un dilatomètre extrèmement précis, stable dans le temps et conçu de façon à être insensible aux variations de l'humidité ambiante. On réalise que ces propriétés sont essentielles pour utiliser une mesure exploitable, en observant que les variations dimensionnelles à mesurer sont parfois inférieures à 1 µm par mm d'échantillon, qu'il faut plusieurs semaines à l'échantillon pour qu'il atteigne son état d'équilibre, et que les capteurs de déplacement les plus précis présentent généralement une dérive de plusieurs µm lorsqu'on fait varier de façon importante l'humidité ambiante.

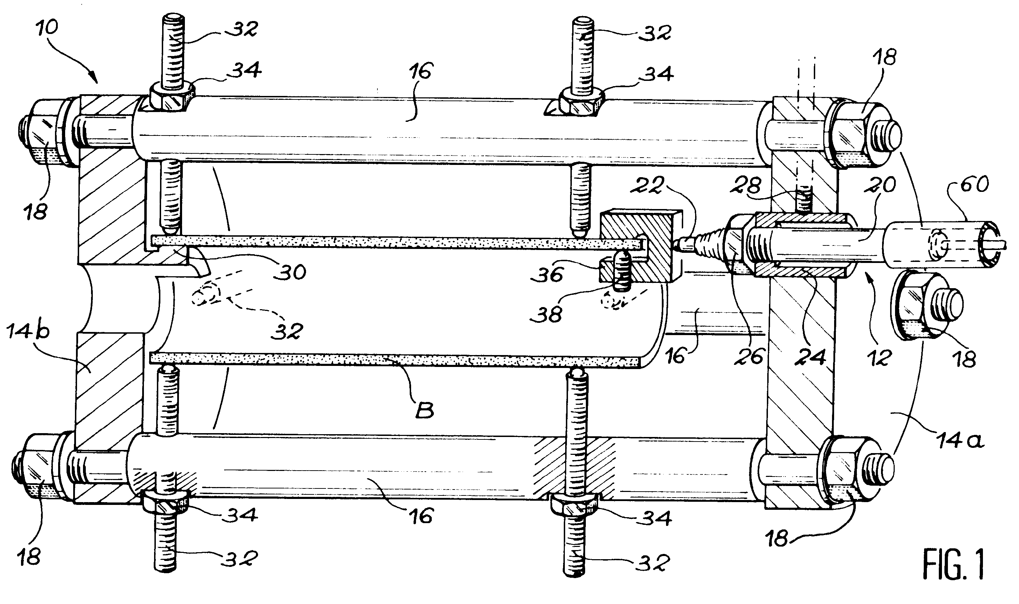

Les principaux éléments de ce dilatomètre sont illustrés sur la figure 1, sur laquelle la référence 10 désigne de façon générale un berceau rigide permettant de supporter l'échantillon à tester, la référence 12 désignant un capteur de déplacement monté sur ce berceau rigide.

Le berceau rigide 10 comprend deux flasques massifs 14a et 14b, formant deux disques parallèles et coaxiaux reliés à leur périphérie par quatre entretoises cylindriques 16 régulièrement espacées, dont trois seulement apparaissent sur la figure 1. Les extrémités de chacune des entretoises 16 présentent des parties de plus petit diamètre qui traversent des trous formés dans les flasques. Des écrous 18 vissés sur les extrémités filetées de ces parties de plus petit diamètre permettant de brider les flasques 14a et 14b sur les entretoises 16 pour former le berceau rigide 10. Les flasques 14a et 14b comme les entretoises 16 sont réalisés en un matériau présentant un coefficient de dilatation thermique aussi faible que possible, tel que de l'Invar (marque déposée).

Le capteur de déplacement 12 est un capteur à contact, avec détection par transformateur différentiel linéaire (non représenté) logé dans un corps 20 dans lequel un doigt de contact 22 est guidé axialement par l'intermédiaire d'un roulement (non représenté). Il peut notamment s'agir d'un capteur SCHAEVITZ (Marque commerciale déposée), modèle LBB-375-TA-U60. Ce capteur 12 est monté dans le flasque 14a en une position parallèle et décalée par rapport à l'axe de ce dernier, dans un plan radial contenant les axes de deux des entretoises 16.

Le montage du capteur 12 dans le flasque 14a est réalisé par l'intermédiaire d'une bague 24 vissée sur un filetage formé sur le corps 20 du capteur et bloquée par un contre-écrou 26. Cette bague 24 coulisse librement dans un alésage formé dans le flasque 14a, et elle est bloquée dans la position désirée par une vis 28 dont l'axe est contenu dans le plan médian du flasque 14a.

Sur sa face tournée vers le flasque 14a, le flasque 14b comporte une partie en saillie 30 qui a la forme d'un arc de cercle centré sur l'axe du flasque 14b, et dont une génératrice de la surface extérieure est sensiblement alignée avec l'axe du capteur de déplacement 12.

A proximité immédiate du flasque 14b et à au moins un autre endroit situé à une certaine distance du flasque 14a, chacune des entretoises 16 est percée d'un trou taraudé dont l'axe est orienté radialement par rapport à l'axe commun aux deux flasques. Des tiges filetées 32 sont reçues dans ces trous taraudés et peuvent être immobilisées par des contre-écrous 34. L'une de ces tiges filetées 32, représentée en haut et à gauche sur la figure 1, se trouve en face de la surface extérieure de la partie en saillie 30 et constitue, avec cette dernière, un moyen de pincement d'une extrémité de l'échantillon adjacente au flasque 14b. Les autres tiges filetées 32 permettent de maintenir l'échantillon dans la position souhaitée à l'intérieur du berceau 10, en évitant son flambage notamment lorsqu'il s'agit d'une plaque mince ou anisotrope.

Pour compléter le montage, une pièce intermédiaire 36, en forme de U, est prévue pour venir s'interposer entre l'extrémité de l'échantillon la plus proche du flasque 14a et le doigt de contact 22 du capteur 12. La pièce intermédiaire 36 coiffe l'extrémité correspondante de l'échantillon, et vient pincer les faces opposées de ce dernier, au moyen d'une vis 38 traversant l'une des branches formées par cette pièce.

La figure 1 illustre plus précisément le cas où l'échantillon qui est placé dans le berceau rigide 10 est un tronçon de barre tubulaire B. Ce tronçon est placé de telle sorte que la partie en saillie 30 du flasque 14b pénètre dans l'une de ses extrémités, sans que la face terminale du tronçon de barre B soit en contact avec le flasque 14b. L'extrémité correspondante du tronçon de barre B est immobilisée par pincement contre la partie en saillie 30, au moyen de la tige filetée 32 qui se trouve en face de cette partie 30.

Par ailleurs, la pièce intermédiaire 36 est fixée par pincement, au moyen de la vis 38, sur l'extrémité opposée du tronçon de barre B, sur la même génératrice de ce tronçon que celle qui est pincée entre la tige filetée 32 et la partie en saillie 30. Ici encore, le pincement de la pièce 36 sur le tronçon de barre B est réalisé de telle sorte que la face terminale de ce tronçon ne soit pas en contact direct avec la pièce intermédiaire 36.

Le montage particulier qui vient d'être décrit, dans lequel le tronçon de barre B ne prend pas appui sur ses faces terminales mais par pincement sur ses faces latérales, permet d'éviter que des effets de bords pouvant se produire sur les faces terminales ne viennent introduire des erreurs dans les mesures. En effet, la variation du taux de l'humidité dans l'échantillon peut conduire à des déformations anisotropes de ce dernier au niveau de ses faces terminales.

Le positionnement et le maintien de l'échantillon formé par le tronçon de barre B à l'intérieur du berceau rigide 10 sont assurés par les tiges filetées 32, afin que l'axe du tronçon de barre soit parallèle ou confondu avec l'axe commun aux flasques 14a et 14b. Le doigt de contact 22 du capteur de déplacement 12 est alors amené au contact de la pièce intermédiaire en faisant coulisser la bague 24 dans le flasque 14a, puis on bloque cette bague au moyen de la vis 28. Le capteur 12 est alors pratiquement aligné avec la génératrice du tronçon de barre B dont une extrémité est pincée entre la partie en saillie 30 et la tige filetée 32 qui lui fait face.

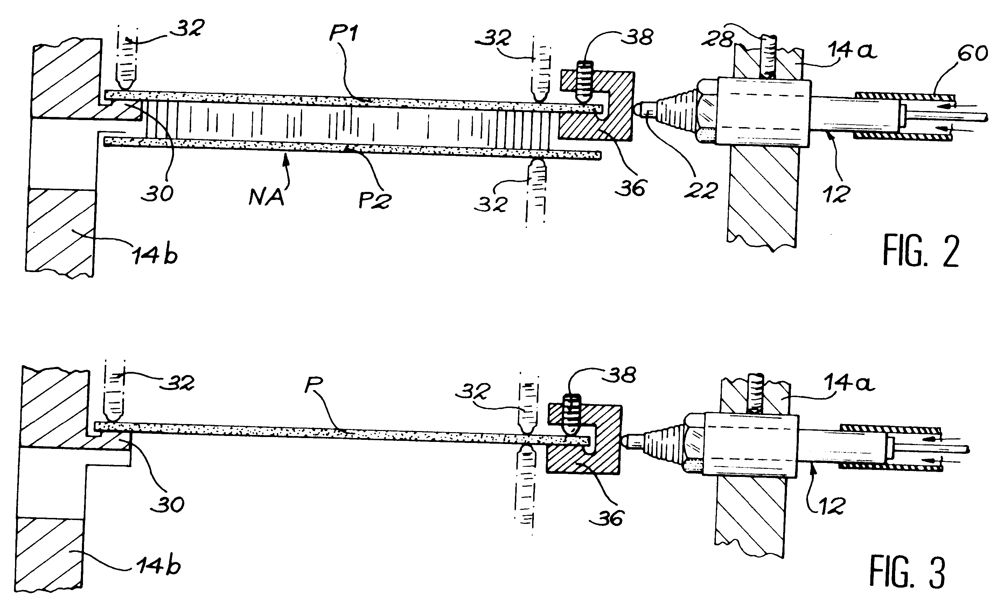

Comme l'illustrent respectivement les figures 2 et 3, le montage est réalisé de la même manière lorsque l'échantillon est un tronçon de structure en nids d'abeilles NA et lorsque l'échantillon est un tronçon de plaque P.

Plus précisément, lorsque l'échantillon est un tronçon de structure en nids d'abeilles NA (figure 2), l'une P1 des plaques latérales P1, P2 de ce tronçon est placée dans l'alignement de l'axe du capteur 12, une première extrémité de cette plaque P1 étant pincée entre la partie en saillie 30 du flasque 14b et la tige filetée 32 qui lui fait face, alors que l'extrémité opposée de cette même plaque P1 est pincée dans la pièce intermédiaire 36 par la vis 38.

Lorsque l'échantillon est un tronçon de plaque P (figure 3), le montage est le même que celui de la plaque P1 du tronçon de structure en nids d'abeilles NA.

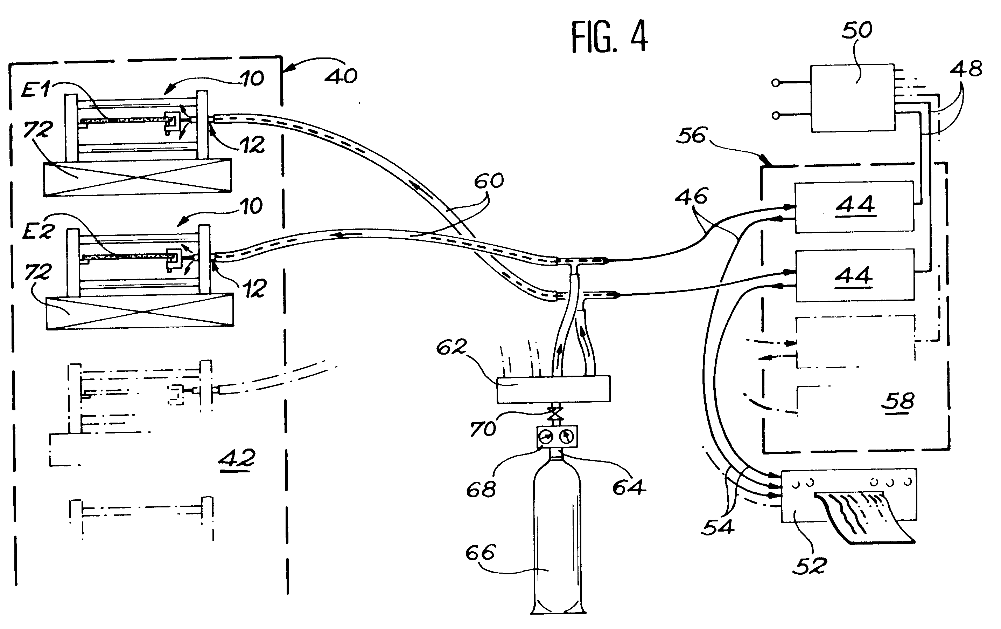

En plus du berceau rigide 10 et du capteur de déplacement 12 associé à ce berceau, l'appareil selon l'invention comprend d'autres éléments qui vont à présent être décrits en se référant à la figure 4.

Sur la figure 4, on voit que l'appareil comprend avantageusement plusieurs berceaux rigides 10 sur lesquels sont montés des échantillons E1, E2, etc., qui peuvent être indifféremment des tronçons de barre B, des tronçons de structure en nids d'abeilles NA ou des tronçons de plaque P, selon les mesures à effectuer. Ces berceaux rigides 10 sont placés dans une enceinte climatique 40 qui permet de contrôler à volonté les caractéristiques de température et d'hygrométrie dans le volume 42 délimité par cette enceinte.

Le capteur de déplacement 12 associé à chacun des berceaux rigides 10 est connecté électriquement à une alimentation 44 par un conducteur électrique 46. Chaque alimentation 44 est elle-même reliée au secteur par un conducteur électrique 48, au travers d'un onduleur 50 permettant de stabiliser la tension d'alimentation à ± 3 %. Les sorties des alimentations 44 sont reliées à un enregistreur multivoies 52, ou à tout appareil d'affichage équivalent, par des conducteurs électriques 54.

Afin d'améliorer la précision des mesures effectuées, les alimentations 44 sont avantageusement placées à l'intérieur d'une deuxième enceinte climatique 56 dont le volume intérieur 58 est maintenu à une température constante, par exemple d'environ 22°C.

L'installation qui vient d'être décrite permet d'alimenter électriquement les capteurs de déplacement 12 et d'afficher sur l'enregistreur 52 les variations dimensionnelles des échantillons détectées par les différents capteurs.

Conformément à une caractéristique essentielle de l'invention, l'appareil comprend en outre des moyens permettant de maintenir en permanence les capteurs de déplacement 12 dans des conditions d'humidité pratiquement invariables pendant toute la durée des mesures, c'est-à-dire pendant plusieurs semaines. En l'absence de ces moyens, les capteurs subiraient une dérive d'amplitude comparable à l'amplitude des déplacements à mesurer, qui s'explique par le fait que les enroulements des transformateurs différentiels sont noyés dans une résine sensible, comme les matériaux composites à tester, aux variations d'humidité.

Comme l'illustrent les figures 1 et 4, un tuyau souple 60 est emmanché sur le corps 20 de chacun des capteurs 12, à l'opposé des doigts de contact 22. En dehors de l'enceinte climatique 40, chacun des tuyaux 60 est raccordé, par l'intermédiaire d'un filtre unique 62, sur un tuyau 64 dont l'extrémité opposée est raccordée sur une source d'air sec comprimé, telle qu'une bouteille 66. Un régulateur de pression 68 et une vanne 70 sont placés sur le tuyau 64.

Cette partie de l'appareil permet d'injecter, à un débit contrôlé, de l'air sec dans chacun des capteurs de déplacement 12. Cet air sec a pour effet de maintenir les capteurs 12 dans une humidité qui reste constante, malgré les variations d'humidité qui se produisent dans l'enceinte 40. Le débit de l'air injecté dans les capteurs est cependant suffisamment faible pour ne pas modifier l'humidité autour des échantillons E1, E2,...

Afin de pouvoir déduire des mesures de déformation effectuées grâce aux capteurs 12 la valeur du coefficient de dilatation hydrique β, il est nécessaire de pouvoir associer à ces mesures de déformation des mesures indiquant la quantité d'eau présente dans les échantillons. Pour cela, on contrôle l'évolution de la masse des échantillons, par exemple en réalisant chacun des échantillons en double et en sortant à des instants déterminés les doubles des échantillons placés dans les berceaux, afin de les peser en dehors de l'enceinte climatique.

Ces échantillons en double peuvent également être pendus à une balance, placée au-dessus de l'enceinte climatique et dont le porte-échantillon est un fil passant par un trou pratiqué dans la voûte. Cette disposition permet un enregistrement continu de la masse.

Pour procéder à une mesure, les échantillons sont montés dans les berceaux rigides, de la manière décrite précédemment, puis placés dans une enceinte à vide où ils sont d'abord asséchés. En surveillant l'évolution de la masse des échantillons d'accompagnement en fonction du temps, on sait que les échantillons sont secs lorsque cette masse n'évolue plus. Ensuite, les appareils sont transportés dans l'enceinte climatique 40 et équipés des capteurs 12. Après stabilisation de la température de l'ensemble à un niveau désiré, l'humidité est admise progressivement jusqu'au taux convenu. La mesure de l'évolution de la longueur des échantillons en fonction de l'humidité peut alors commencer.

Afin d'effectuer cette mesure on met en marche l'enregistreur 52, l'injection d'air sec dans les capteurs 12 à partir de la bouteille 66 étant assuré en permanence depuis plusieurs jours et les alimentations 56 étant constamment sous tension.

La température à l'intérieur de l'enceinte 40 est maintenue constante pendant toute la mesure, par exemple à une valeur voisine de 70°C, qui constitue un compromis permettant d'accélérer l'absorption de l'eau par les échantillons sans endommager la résine. Une température inférieure à 70°C peut cependant être choisie.

A partir de ce moment, les échantillons s'imprègnent lentement d'eau. La masse d'eau absorbée étant connue par exemple à l'aide des balances 72 et l'évolution de longueur des échantillons étant affichée sur l'enregistreur 52, il est possible de déterminer le coefficient de dilatation hydrique β des échantillons E1, E2, ... en appliquant la relation (1). Dans un mode de réalisation non représenté, ce coefficient peut d'ailleurs être déterminé directement par un calculateur recevant respectivement des signaux représentatifs de la masse et de la longueur des échantillons.

Grâce à l'invention, qui permet d'effectuer des mesures de longueurs extrèmement précises et stables, indépendamment de l'humidité ambiante, il est donc possible de prévoir le comportement de structures composites destinées, par exemple, à être utilisées dans le domaine spatial. En particulier, il est possible de tenir compte, lors de la vie des structures supportant des optiques embarquées, de l'évolution de longueur de ces structures par suite de leur assèchement dans le vide spatial. Les précisions des optiques actuelles peuvent ainsi être multipliées environ par dix.

Bien entendu, l'invention n'est pas limitée au mode de réalisation qui vient d'être décrit à titre d'exemple, mais en couvre toutes les variantes. Ainsi, la structure du berceau rigide peut être différente de celle qui a été décrite et un nombre quelconque de berceaux peut être placé simultanément dans l'enceinte climatique, à condition toutefois de ne pas dépasser les limites de bon fonctionnement de ladite enceinte.

## Revendications

1. Appareil permettant de déterminer le coefficient de dilatation hydrique β des éléments d'une structure composite, caractérisé par le fait qu'il comprend :
   - un berceau rigide (10), réalisé en un matériau thermiquement stable et non-hygroscopique, et comprenant des moyens (16) pour maintenir dans une position désirée un échantillon de ladite structure et des moyens (16,30) pour immobiliser une première extrémité de l'échantillon;
   - un capteur de déplacement (12) monté sur le berceau rigide, en face d'une deuxième extrémité de l'échantillon opposée à la première, de façon à mesurer des variations de longueur de l'échantillon;
   - un tube (60,64) d'admission d'air sec dans le capteur, relié à une source d'air sec (66) et dont une extrémité opposée à ladite source coiffe une partie arrière du capteur de déplacement;
   - une enceinte climatique (40) de réception du berceau rigide et de son capteur de déplacement, apte à faire varier l'humidité de l'atmosphère entourant le berceau et le capteur dans une plage déterminée; et
   - des moyens de mesure (72) de variation de poids de l'échantillon.

2. Appareil selon la revendication 1, caractérisé par le fait que le capteur de déplacement (12) est un capteur à détection par transformateur différentiel linéaire, comportant un doigt de contact (22) guidé axialement par un roulement.

3. Appareil selon la revendication 2, caractérisé par le fait que les moyens pour immobiliser la première extrémité de l'échantillon sont des moyens de pincement (30,32) prenant appui sur des faces latérales de ce dernier, et par le fait que le doigt de contact (22) du capteur (12) est apte à venir en contact avec un organe intermédiaire (36) pincé sur les faces latérales de l'échantillon, à proximité de la deuxième extrémité de ce dernier.

4. Appareil selon l'une quelconque des revendications précédentes, caractérisé par le fait que le capteur de déplacement (12) est connecté électriquement à un moyen d'alimentation électrique (44) placé dans une deuxième enceinte à température constante.

5. Appareil selon la revendication 4, caractérisé par le fait que le moyen d'alimentation électrique (44) est connecté électriquement au secteur par l'intermédiaire d'un onduleur (50) stabilisant la tension.

6. Appareil selon l'une quelconque des revendications précédentes, caractérisé par le fait que le tube d'admission d'air sec est raccordé sur la source d'air sec (66) au travers d'un régulateur de pression, d'un moyen de contrôle de débit et de moyens de filtration.

## Patentansprüche

1. Vorrichtung zur Bestimmung des Ausdehnungskoeffizienten β durch Wasserabsorption von Elementen einer Verbundstruktur, **dadurch gekennzeichnet, daß** sie umfaßt:
   - einen starren Rahmen (10), der aus einem thermisch stabilen und nicht-hygroskopischen Material hergestellt ist, eine Einrichtung (16), um ein Eichmaß der Struktur in einer gewünschten Position zu halten, und eine Einrichtung (16,30) aufweist, um ein erstes Ende des Eichmaßes festzumachen;
   - einen Verschiebungssensor (12), welcher auf dem starren Rahmen bei einem zweiten Ende des Eichmaßes gegenüber dem ersten in der Weise vorgesehen ist, daß Änderungen der Länge des Eichmaßes gemessen werden;
   - ein Rohr (60, 64) zum Einlassen von trockener Luft in den Sensor, welches mit einer Quelle (66) von trockener Luft verbunden ist und dessen Ende entgegengesetzt zu dieser Quelle einen rückwärtigen Teil des Verschiebesensors überdeckt;
   - einen Klimabehälter (40) zur Aufnahme des starren Rahmens und seines Verschiebesensors, welcher zur Änderung der Feuchtigkeit der den Rahmen und den Sensor umgebenden Atmosphäre in einem vorbestimmten Bereich geeignet ist; und
   - eine Einrichtung (72) zum Messen der Änderung des Gewichtes des Eichmaßes.

2. Vorrichtung nach Anspruch 1, **dadurch gekennzeichnet, daß** der Verschiebesensor (12) ein Sensor zur Detektierung durch differentiell-lineare Transformation ist, welcher einen Kontaktfinger (22) umfaßt, der axial durch ein Lager geführt ist.

3. Vorrichtung nach Anspruch 2, **dadurch gekennzeichnet, daß** die Einrichtung zum Festmachen des ersten Endes des Eichmaßes eine Zangeneinrichtung (30, 32) ist, welche an den Seitenflächen des letzteren angreift, und daß der Kontaktfinger (22) des Sensors geeignet ist, in Kontakt mit einem Zwischenelement (36) zu kommen, welches an die Seitenflächen des Eichmaßes nahe des zweiten Endes der letzteren angreift.

4. Vorrichtung nach einem der vorangegangenen Ansprüche, **dadurch gekennzeichnet, daß** der Verschiebesensor (12) mit einer elektrischen Versorgungseinrichtung (44) elektrisch verbunden ist, welche in einem zweiten Gehäuse von konstanter Temperatur vorgesehen ist.

5. Vorrichtung nach Anspruch 4, **dadurch gekennzeichnet, daß** die elektrische Versorgungseinrichtung (44) elektrisch mit dem Versorgungsnetz mittels eines Wechselrichters (50) verbunden ist, der spannungsstabilisiert ist.

6. Vorrichtung nach einem der vorangegangenen Ansprüche, **dadurch gekennzeichnet, daß** das Rohr zum Einlassen der trockenen Luft mit einer Quelle trockener Luft (66) über einen Druckregler, eine Durchflußsteuereinrichtung und eine Filtereinrichtung verbunden ist.

**Claims**

1. Device making it possible to determine the coefficient of the hydric expansion β of the elements of a composite structure, characterized in that it comprises:
   - a rigid cradle (10) made of a thermically stable and non-hygroscopic material and including means (16) to maintain in a desired position a sample of said structure and means (16, 30) to immobilize a first extremity of the sample;
   - a displacement transducer (12) mounted on the rigid cradle opposite a second extremity of the sample opposing the first extremity so as to measure the length variations of the sample;
   - a tube (60, 64) for admitting dry air into the transducer and connected to a dry air source (66) and having one extremity opposing said source overlapping one rear section of the displacement transducer;
   - a climatic chamber (40) for receiving the rigid cradle and its displacement transducer and able to vary the humidity of the atmosphere surrounding the cradle and the transducer within a determined range; and

   - means (72) to measure the weight variation of the sample.

2. Device according to claim 1, characterized in that the displacement transducer (12) is a linear differential transformer detection transducer comprising a contact finger (22) axially guided by a roller bearing.

3. Device according to claim 2, characterized in that the means to immobilize the first extremity of the sample are clamping means (30, 32) bearing on the lateral faces of the latter and the contact finger (22) of the transducer (12) is adapted to come into contact with an intermediate member (36) clamped onto the lateral faces of the sample close to the second extremity of the latter.

4. Device according to any one of the preceding claims, characterized in that the displacement transducer (12) is electrically connected to an electric power device (44) placed in a second chamber at a constant temperature.

5. Device according to claim 4, characterized in that the electric power device (44) is electrically connected to the mains supply by means of a d.c.-a.c. converter (50) stabilizing the voltage.

6. Device according to any one of the preceding claims, characterized in that the dry air intake tube is connected to the dry air source (66) through a pressure regulator, a flow rate control device and filtering means.

FIG.1

FIG. 2

FIG. 3

EP 0 426 550 B1

# FIG. 4

EP 0 426 550 B1